# EUROPÄISCHE PATENTSCHRIFT

(11) **EP 0 615 121 B1**
(45) Veröffentlichungstag und Bekanntmachung des Hinweises auf die Patenterteilung: **04.06.1997**
(21) Anmeldenummer: 93116204.4
(22) Anmeldetag: 07.10.1993
(51) Int. Cl.: G01N 1/12

(54) **Probennehmer für Metallschmelze**
Device for taking samples of molten metals
Preneur d'échantillon pour métal en fusion

(30) Priorität: 09.02.1993 DE 4303687
(43) Veröffentlichungstag der Anmeldung: 14.09.1994
(73) Patentinhaber: Heraeus Electro-Nite International N.V., 2000 Antwerpen (BE)
(72) Erfinder: Baerts, Christian, B-3940 Beringen-Paal (BE)
(74) Vertreter: Kühn, Hans-Christian

(56) Entgegenhaltungen:
- EP-A- 0 107 219
- DE-A- 3 000 201
- DE-A- 4 101 155
- GB-A- 1 150 149

## Beschreibung

Die Erfindung betrifft einen Probennehmer für Metallschmelze mit einem Trägerkörper, in dem eine Probenkammer und eine mit dieser über eine Einströmöffnung dichtend verbundene Vorkammer in Achsrichtung des Trägerkörpers hintereinander angeordnet sind, wobei die Vorkammer einen durch den Trägerkörper hindurchführenden Einlaufkanal aufweist.

Derartige Probennehmer sind beispielsweise aus der DE-A-4101155 und der DE-A- 3000201 bekannt. In der DE-A-3000201 ist ein Probennehmer beschrieben mit einem Trägerkörper, in dem eine Probenkammer angeordnet ist, die über eine Einströmöffnung mit einer Vorkammer verbunden ist. Die Vorkammer weist einen Einlaufkanal für Metallschmelze auf, der durch die seitliche Begrenzung des Trägerkörpers hindurchgeführt ist. Probenkammer und Vorkammer sind durch separate Gehäuseteile gebildet, die in dem Trägerkörper fixiert sind. Üblicherweise erfolgt die Fixierung durch kraftschlüssiges Einpassen der Teile in den Trägerkörper oder durch Einkleben mittels Kleberzement. Dabei ist eine hohe Genauigkeit der einzelnen Teile erforderlich, um die Dichtheit zu gewährleisten. Dadurch wird ein relativ hoher Arbeitsaufwand bei der Herstellung der einzelnen Probennehmerteile und bei der Montage notwendig.

Ein ähnlicher Probennehmer ist auch aus der GB 1150149 bekannt. Probenkammer und Vorkammer weisen hier eine gemeinsame seitliche Umhüllung auf, die in einem Trägerkörper angeordnet ist. Die beiden Kammern werden durch einen in die gemeinsame Umhüllung eingesetzten Trennkörper voneinander getrennt. Bei dieser Art Probennehmer ist eine exakte Fixierung des Trennkörpers in der gemeinsamen Umhüllung notwendig, um eine Probekammer in der gewünschten Größe zu erhalten. Das Herausnehmen der Probe, d. h. eine Abtrennung der Probenkammer von der Vorkammer gestaltet sich bei dieser Anordnung relativ aufwendig, da dabei zuerst die gemeinsame Umhüllung zerstört werden muß.

Der Erfindung liegt deshalb die Aufgabe zugrunde einen Probennehmer anzugeben, der auch mit größeren Fertigungstoleranzen einfach und sicher montierbar ist und ein einfaches Entfernen der Probe nach der Probennahme ermöglicht.

Erfindungsgemäß wird die vorstehend genannte Aufgabe für einen Probennehmer gemäß dem Oberbegriff des Anspruches 1 dadurch gelöst, daß die Probenkammer mittels eines Federelementes in Achsrichtung gegen die Vorkammer gehalten ist. Durch eine solche Anordnung ist gewährleistet, daß die Probenkammer stets toleranzfrei an der Vorkammer anliegt. Durch den Federdruck werden unvermeidbar auftretende Fertigungstoleranzen ausgeglichen. Die exakte Fixierung der Probenkammer an der Vorkammer wird durch die Feder gewährleistet und muß nicht manuell vorgenommen werden. Die Montage ist daher weniger zeitaufwendig, da die manuelle Justierung der Probenkammer entfällt. Nach der Probennahme ist ein einfaches Entfernen der Probe von dem Probennehmer möglich, da die Probenkammer nicht fest mit dem Trägerkörper verbunden ist.

Vorteilhaft ist es, daß das Federelement an einem in dem Trägerkörper fixierten Anschlagelement abgestützt ist. Dadurch ist eine wenig aufwendige Anbringung des Federelementes gewährleistet, da das Anschlagelement einerseits den festen Sitz des Federelementes gewährleistet und andererseits nahezu beliebig und ohne Justieraufwand fixierbar ist. Denkbar wäre allerdings auch, daß das Federelement die Probenkammer und die Vorkammer von ihren voneinander abgewandten Seiten her umfaßt, so daß beide Kammern zwischen den druckausübenden Schenkeln des Federelementes angeordnet sind.

Zweckmäßigerweise weist das Anschlagelement eine Ausnehmung auf, in der das Federelement zentriert gehaltert ist. Dadurch kann das Federelement mit dem Anschlagelement vor dem Einführen in den Trägerkörper verbunden werden, so daß der Montageaufwand vereinfacht wird. Das Federelement kann in die Ausnehmung hineingesteckt und gegebenenfalls in dieser Ausnehmung verklebt werden. Dadurch ist es während der Montage und danach in der vorbestimmten Lage fixiert.

Zweckmäßigerweise ist die Probenkammer am Eintauchende des Trägerkörpers und das Federelement an dem eintauchseitigen Ende der Probenkammer angeordnet. Dadurch ist eine leichtere Entnahme der Probenkammer nach der Probennahme möglich, da diese am Ende des Probennehmers angeordnet ist. Üblicherweise werden Probennehmer der beschriebenen Art von oben in das die Metallschmelze enthaltende Gefäß eingetaucht. Dieser Tauchvorgang geschieht häufig automatisch, d. h., der Probennehmer ist an einer Schwenk- und Hubeinrichtung angebracht. Nach der Probennahme wird der Probennehmer seitlich aus dem Bereich des die Metallschmelze enthaltenden Gefäßes herausgeschwenkt und abgestoßen. Dabei fällt er in der Regel einige Meter in die Tiefe. Bei dem Aufprall können bei herkömmlichen Probennehmern Deformierungen an der zu diesem Zeitpunkt noch sehr heißen Probenkammer hervorgerufen werden, so daß die Probe nicht mehr verwertbar ist. Bei der oben beschriebenen frontseitigen Anordnung des Federelementes wirkt dieses bei dem Aufprall als eine Art Puffer, der einen Teil der Aufprallenergie aufnimmt und dadurch eine Zerstörung der Probenkammer und damit der Probe verhindert.

Vorteilhaft ist es, daß in der Einströmöffnung ein Quarzrohr angeordnet ist, das in die Vorkammer hineinragt, wobei das Quarzrohr durch einen Formkörper aus feuerfestem Material an der Probenkammer fixiert ist und wobei der Formkörper an der der Probenkammer zugewandten Seite der Vorkammer anliegt. Dieser Formkörper kann beispielsweise aus herkömmlichem Gießereisand bestehen. Er liegt zweckmäßigerweise kraftschlüssig an der Probenkammer an, beispielsweise durch Aufpressen, und das Quarzrohr ist mittels eines feuerfesten Zementes an dem Trägerkörper fixiert. Dabei ist zum einen ein dichtes Anliegen der Probenkammer an der Vorkammer gesichert, wobei der Formkörper selbst die Begrenzung der Vorkammer an der der Probenkammer zugewandten Seite darstellen kann. Zum anderen schützt der Formkörper das einen Kanal für den Einlauf der Metallschmelze in die Probenkammer bildende Quarzrohr. Das zwischen der Probenkammer und der Vorkammer angeordnete Quarzrohr gewährleistet eine einfache Entnahme der Probenkammer mit der Probe aus dem Trägerkörper.

Zweckmäßigerweise ist das Federelement aus einer Spiralfeder, insbesondere aus einer zylindrischen Spiralfeder gebildet. Dadurch ist eine gleichmäßige, in axialer Richtung wirkende Kraftübertragung möglich. Denkbar wäre auch, kegelige Spiralfedern oder andere Federelemente, wie Tellerfedern, Blattfedern, Federringe oder Federsäulen zu verwenden.

Vorteilhaft ist es, daß an der dem Eintauchende abgewandten Begrenzungsfläche der Vorkammer ein zweites Federelement angeordnet ist, das gegen einen in dem Trägerkörper fixierten Anschlag gehalten ist. Dadurch wird die Justierung der Vorkammer vereinfacht. Sie wird bei der Montage gegen das Federelement in den Trägerkörper hineingedrückt, bis die Lage der für den Einlaufkanal vorgesehenen Öffnung mit der Lage der in dem Trägerelement befindlichen Öffnung für den Einlaufkanal übereinstimmt und kann beispielsweise durch geeignete Verbindung der Öffnung in dem Trägerkörper mit der öffnung in der Vorkammer fixiert werden. Diese Verbindung kann durch ein als Einlaufkanal dienendes Rohr gebildet werden. Zweckmäßig für eine einfache Herstellung der Vorkammer ist es, daß die dem Eintauchende abgewandte Begrenzungsfläche als Abdeckplatte ausgebildet ist. Diese Abdeckplatte wird durch das zweite Federelement dichtend gegen die seitlichen Wände der Vorkammer gepreßt. Die Spannkraft der Federelemente beträgt vorteilhaft 30 N bis 100 N, vorzugsweise etwa 60 N. Eine solche Spannkraft ist in der Regel ausreichend. Es sind auch andere, beispielsweise größere Spannkräfte möglich, dabei ist jedoch mit größerwerdender Spannkraft auch eine stärkere Abstützung der Anschläge der Federelemente notwendig.

Das an dem Eintauchende angeordnete Anschlagelement kann zweckmäßigerweise als Meßkopf zur Aufnahme von Sensoren, beispielsweise eines Thermoelementes und/oder eines elektrochemischen Meßfühlers ausgebildet sein. Damit wäre dann gleichzeitig zur Probennahme eine direkte Messung in der Metallschmelze möglich.

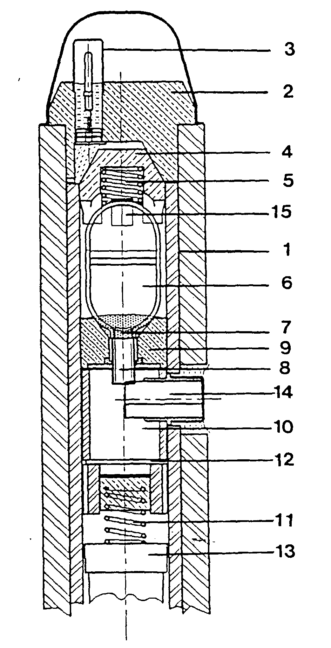

Nachfolgend wird die Erfindung anhand eines Ausführungsbeispieles mit Hilfe einer Zeichnung näher erläutert. Die Zeichnung zeigt das Eintauchende eines Probennehmers im Längsschnitt. Der Probennehmer weist einen Trägerkörper 1 auf, der aus zwei ineinander geschobenen Rohren aus Pappe gebildet ist. An seinem Eintauchende ist der Trägerkörper 1 von einem Meßkopf 2, der an seiner Außenseite einen Meßfühler 3 trägt, verschlossen. Im Inneren des Trägerkörpers 1 ist der Meßkopf als Anschlagelement 4 ausgebildet, das in einer Ausnehmung eine zylindrische Spiralfeder 5 fixiert. Die Spiralfeder 5 drückt auf ihrer dem Meßkopf abgewandten Seite gegen eine Probenkammer 6, die eine Einströmöffnung 7 auf ihrer dem Eintauchende des Probennehmers abgewandten Seite aufweist. An der Einströmöffnung 7 ist ein Quarzrohr 8 angeordnet, das mittels eines Formkörpers 9 mit der Probenkammer 6 dichtend verbunden ist. Dabei ist der Formkörper 9 auf die Probenkammer 6 im Bereich ihrer Einströmöffnung aufgepreßt und das Quarzrohr 8 ist mittels eines feuerfesten Zementes an dem Formkörper 9 fixiert. Der Formkörper 9 drückt, bedingt durch die Federspannung gegen die der Probenkammer 6 zugewandte Seite der Vorkammer 10. Dadurch entsteht eine nach außen abgedichtete Verbindung zwischen der Vorkammer 10 und der Probenkammer 6.

Die Vorkammer 10, ist während der Montage mittels des zweiten Federelementes 11, das zwischen der Abdeckplatte 12, der Vorkammer 10 und dem in dem Trägerkörper 1 fixierten Anschlag 13 angeordnet ist, beweglich gelagert. Sie wird mittels des durch Öffnungen in dem Trägerkörper 1 und in der Seitenwand der Vorkammer 10 geführten Einlaufkanales 14 in ihrer Lage fixiert. Die Probenkammer 6 mit dem Quarzrohr 8 und dem Formkörper 9 bleibt gegen die Spiralfeder 5 beweglich, so daß sie bei dem der Probennahme folgenden Fall des Probenehmers auf den Boden von der Spiralfeder 5 abgefedert wird und dadurch keine Deformation erleidet. Die Gefahr einer Verformung bestünde insbesondere auch dann, wenn die Probenkammer 6 als Flachprobenkammer ausgebildet ist. Diese Flachprobenkammer besteht in diesem Fall aus zwei parallel zur Längsachse des Probennehmers trennbaren Hälften, die durch eine Klammer 15 zusammen gehalten sind. Nach dem abgefederten Aufprall auf den Boden kann die Probenkammer 6 und mit ihr die Probe unbeschädigt aus dem Probennehmer entnommen werden.

## Patentansprüche

1. Probennehmer für Metallschmelze mit einem Trägerkörper, in dem eine Probenkammer und eine mit dieser über eine Einströmöffnung dichtend verbundene Vorkammer in Achsrichtung des Trägerkörpers hintereinander angeordnet sind, wobei die Vorkammer einen durch den Trägerkörper hindurchführenden Einlaufkanal aufweist, dadurch gekennzeichnet, daß die Probenkammer (6) mittels eines Federelementes (5) in Achsrichtung gegen die Vorkammer (10) gehalten ist.

2. Probennehmer nach Anspruch 1, dadurch gekennzeichnet, daß das Federelement (5) an einem in dem Trägerkörper (1) fixierten Anschlagelement (4) abgestützt ist.

3. Probennehmer nach Anspruch 2, dadurch gekennzeichnet, daß das Anschlagselement (4) eine Ausnehmung aufweist, in der das Federelement (5) zentriert gehaltert ist.

4. Probennehmer nach Anspruch 2 oder 3, dadurch gekennzeichnet, daß die Probenkammer (6) am Eintauchende des Trägerkörpers (1) und das Federelement (5) an dem eintauchseitigen Ende der Probenkammer (6) angeordnet sind.

5. Probennehmer nach einem der Ansprüche 1 bis 4, dadurch gekennzeichnet, daß in der Einströmöffnung (7) ein Quarzrohr (8) angeordnet ist, das in die Vorkammer (10) hineinragt, wobei das Quarzrohr (8) durch einen Formkörper (9) aus feuerfestem Material an der Probenkammer (6) fixiert ist und wobei der Formkörper (9) an der der Probenkammer (6) zugewandten Seite der Vorkammer (10) anliegt.

6. Probennehmer nach Anspruch 5, dadurch gekennzeichnet, daß der Formkörper (9) kraftschlüssig an der Probenkammer (6) anliegt und das Quarzrohr (8) mittels eines feuerfesten Zementes an dem Formkörper (9) fixiert ist.

7. Probennehmer nach einem der Ansprüche 1 bis 6, dadurch gekennzeichnet, daß das Federelement (5) aus einer Spiralfeder gebildet ist.

8. Probennehmer nach Anspruch 7, dadurch gekennzeichnet, daß das Federelement (5) eine zylindrische Spiralfeder ist.

9. Probennehmer nach einem der Ansprüche 4 bis 8, dadurch gekennzeichnet, daß an der dem Eintauchende abgewandten Begrenzungsfläche der Vorkammer (10) ein zweites Federelement (11) angeordnet ist, das gegen einen in dem Trägerkörper (1) fixierten Anschlag (13) gehalten ist.

10. Probennehmer nach Anspruch 9, dadurch gekennzeichnet, daß die dem Eintauchende abgewandte Begrenzungsfläche als Abdeckplatte (12) ausgebildet ist.

11. Probennehmer nach einem der Ansprüche 1 bis 10, dadurch gekennzeichnet, daß die Spannkraft der Federelemente (5;11) 30 N bis 100 N beträgt.

12. Probennehmer nach Anspruch 11, dadurch gekennzeichnet, daß die Spannkraft der Federelemente (5;11) etwa 60 N beträgt.

13. Probennehmer nach einem der Ansprüche bis 4 bis 12, dadurch gekennzeichnet, daß das am Eintauchende angeordnete Anschlagelement (4) als Meßkopf (2) zur Aufnahme von Sensoren (3) ausgebildet ist.

## Claims

1. Sampler for molten metal with a carrier body, in which a sample chamber and a pre-chamber, connected therewith in a sealing manner via an inflow opening, are arranged one behind the other in axial direction of the carrier body, in which the pre-chamber has an inlet canal leading through the carrier body, characterised in that the sample chamber (6) is held by means of a spring member (5) in axial direction against the pre-chamber (10).

2. Sampler according to Claim 1, characterised in that the spring member (5) is supported on a stop member (4) which is fixed in the carrier body (1).

3. Sampler according to Claim 2, characterised in that the stop member (4) has a recess in which the spring member (5) is mounted so as to be centred.

4. Sampler according to Claim 2 or 3, characterised in that the sample chamber (6) is arranged at the immersion end of the carrier body (1) and the spring member (5) is arranged at the end of the sample chamber (6) on the immersion side.

5. Sampler according to one of Claims 1 to 4, characterised in that in the inflow opening (7) a quartz pipe (8) is arranged which projects into the pre-chamber (10), in which the quartz pipe (8) is fixed by a shaped body (9) of fireproof material to the sample chamber (6) and in which the shaped body (9) lies against the side of the pre-chamber (10) facing the sample chamber (6).

6. Sampler according to Claim 5, characterised in that the shaped body (9) lies with a force fit against the sample chamber (6) and the quartz pipe (8) is fixed to the shaped body (9) by means of a fireproof cement.

7. Sampler according to one of Claims 1 to 6, characterised in that the spring member (5) is formed from a spiral spring.

8. Sampler according to Claim 7, characterised in that the spring member (5) is a cylindrical spiral spring.

9. Sampler according to one of Claims 4 to 8, characterised in that on the surface of contact of the pre-chamber (10), facing away from the immersion end, a second spring member (11) is arranged which is held against a stop (13) fixed in the carrier body (1).

10. Sampler according to Claim 9, characterised in that the surface of contact facing away from the immersion end is constructed as a cover plate (12).

11. Sampler according to one of Claims 1 to 10, characterised in that the tensional force of the spring members (5;11) amounts to 30 N to 100 N.

12. Sampler according to Claim 11, characterised in that the tensional force of the spring members (5;11) amounts to approximately 60 N.

13. Sampler according to one of Claims 4 to 12, characterised in that the stop member (4), arranged at the immersion end, is constructed as a measurement head (2) to receive sensors (3).

## Revendications

1. Preneur d'échantillon pour un métal en fusion, comportant un corps de support dans lequel sont agencées l'une derrière l'autre, en direction axiale du corps de support, une chambre à échantillon et une chambre préliminaire reliée de façon étanche à celle-ci via une ouverture d'entrée, la chambre préliminaire présentant un canal d'entrée qui traverse le corps de support, caractérisé en ce que la chambre à échantillon (6) est maintenue en direction axiale contre la chambre préliminaire (10) au moyen d'un élément élastique (5).

2. Preneur d'échantillon selon la revendication 1, caractérisé en ce que l'élément élastique (5) est appuyé contre un élément de butée (4) fixé dans le corps de support (1).

3. Preneur d'échantillon selon la revendication 2, caractérisé en ce que l'élément de butée (4) présente un évidement dans lequel l'élément élastique (5) est monté de façon centrée.

4. Preneur d'échantillon selon l'une ou l'autre des revendications 2 et 3, caractérisé en ce que la chambre à échantillon (6) est agencée à l'extrémité de plongée du corps de support (1), et l'élément élastique (5) est agencé à l'extrémité côté plongée de la chambre à échantillon (6).

5. Preneur d'échantillon selon l'une quelconque des revendications 1 à 4, caractérisé en ce que dans l'ouverture d'entrée (7) est agencé un tube en quartz (8) qui pénètre dans la chambre préliminaire (10), le tube en quartz (8) étant fixé par un corps en forme (9) en un matériau réfractaire sur la chambre à échantillon (6), et le corps en forme (9) s'appuyant sur la face de la chambre préliminaire (10), qui est orientée vers la chambre à échantillon (6).

6. Preneur d'échantillon selon la revendication 5, caractérisé en ce que le corps en forme (9) s'appuie par coopération de formes contre la chambre à échantillon (6), et en ce que le tube en quartz (8) est fixé sur le corps en forme (9) par l'intermédiaire d'un ciment réfractaire.

7. Preneur d'échantillon selon l'une quelconque des revendications 1 à 6, caractérisé en ce que l'élément élastique (5) est formé par un ressort hélicoïdal.

8. Preneur d'échantillon selon la revendication 7, caractérisé en ce que l'élément élastique (5) est un ressort hélicoïdal cylindrique.

9. Preneur d'échantillon selon l'une quelconque des revendications 4 à 8, caractérisé en ce qu'un second élément élastique (11) est agencé sur la surface de délimitation de la chambre préliminaire (10), qui est détournée de l'extrémité de plongée, ledit élément élastique étant maintenu contre une butée (13) fixée dans le corps de support (1).

10. Preneur d'échantillon selon la revendication 9, caractérisé en ce que la surface de délimitation détournée de l'extrémité de plongée est réalisée sous forme d'une plaque de recouvrement (12).

11. Preneur d'échantillon selon l'une quelconque des revendications 1 à 10, caractérisé en ce que la force de tension des éléments élastiques (5 ; 11) est de 30 N à 100 N.

12. Preneur d'échantillon selon la revendication 11, caractérisé en ce que la force de tension des éléments élastiques (5 ; 11) est d'environ 60 N.

13. Preneur d'échantillon selon l'une quelconque des revendications 4 à 12, caractérisé en ce que l'élément de butée (4) agencé à l'extrémité de plongée est réalisé sous forme d'une tête de mesure (2) pour recevoir des détecteurs (3).
